# EUROPEAN PATENT SPECIFICATION

(11) **EP 1 414 652 B1**
(45) Date of publication and mention of the grant of the patent: **23.05.2007**
(21) Application number: 02759266.6
(22) Date of filing: 06.08.2002
(51) Int. Cl.: B44F 7/00

(54) **DECORATIVE MATERIALS HAVING GEOMETRIC PATTERNS AND PROCESS FOR PREPARING THE SAME**
DEKORATIVE MATERIALIEN MIT GEOMETRISCHEN MUSTERN UND VERFAHREN ZU DEREN HERSTELLUNG
MATERIAUX DECORATIFS A MOTIFS GEOMETRIQUES ET LEURS PROCEDES DE PREPARATION

(30) Priority: 07.08.2001 US 923697
(43) Date of publication of application: 06.05.2004
(73) Proprietor: E.I. DU PONT DE NEMOURS AND COMPANY, Wilmington, Delaware 19898 (US)
(72) Inventor: OLSON, Barry, D., Williamsville, NY 14221 (US); PAPLHAM, William, P., Getzville, NY 14068 (US); WEBERG, Rolf, T., East Aurora, NY 14052 (US)
(74) Representative: Morf, Jan Stefan
(86) International application number: PCT/US2002/024798
(87) International publication number: WO 2003/013878

(56) References cited:
- EP-A- 0 988 967
- WO-A-97/31776
- US-A- 4 278 483
- US-A- 4 405 539
- US-A- 4 794 020
- US-B1- 6 203 911

## Description

### BACKGROUND OF THE INVENTION

### Field of the Invention

This invention relates to thermosettable compositions that are fabricated into decorative materials, such as solid surface materials, which have unique decorative patterns.

### Description of the Related Art

Solid surface materials are essentially non-porous composites of finely divided mineral fillers dispersed in an organic polymer matrix. Examples of commonly used fillers include alumina trihydrate, calcium carbonate, silica, and alumina. Examples of commonly used thermoset polymeric materials include acrylic, polyester, melamine, urethane, acrylo-urethane, epoxy resins and combinations thereof. Most solid surface materials are manufactured by thermoset processing, such as sheet casting, cell casting, injection molding, or bulk molding. The decorative qualities of such products are greatly enhanced by incorporating pigments and colored particles such that the composite resembles natural stone. The range of patterns commercially available is constrained by the intermediates and processes currently used in the fabrication of such materials.

Solid surface materials in their various applications serve both functional and decorative purposes. Since incorporating various attractive and/or unique decorative patterns enhances their utility, such patterns constitute intrinsically useful properties, which differentiate one product from another. The same principle applies to naturally occurring materials such as wood or stone whose utility, for example in furniture construction, is enhanced by certain naturally occurring patterns, e.g., grain, color variations, veins, strata, inclusions, and others. Commercially manufactured solid surface materials often incorporate decorative patterns intended to imitate or resemble the naturally occurring patterns in granite or marble. However, due to limitations of feasibility and/or practicality, certain decorative patterns and/or categories of decorative patterns have not previously been incorporated in solid surface materials.

Decorative patterns have been previously achieved in traditional thermoset fabrication primarily by the following three methods:
(i) Monochromatic or polychromatic pieces of a pre-existing solid surface product are mechanically ground to produce irregularly shaped colored particles, which are then combined with other ingredients in a new thermoset formulation. Curing the reaction combination during casting or molding produces a solid surface material in which colored inclusions of irregular shapes and sizes are surrounded by, and embedded in a continuous matrix of different color.
(ii) During casting of a thermosettable reaction combination, a second reaction combination of a different color is added in such a way that the two only intermix to a limited degree. In the resulting solid surface material, the different colored domains have smooth shapes and are separated by regions with continuous color variation.
(iii) Different colored solid surface products are cut or machined into various shapes, which are then joined by means of adhesive to create multi-colored inlayed patterns or designs.

Using these traditional thermoset methods it is not possible to produce certain categories of decorative patterns.

EP-A-0988967 discloses a decorative member having two or more layers with decorative patterns. Transparency and orientation of said layers allow for at least a portion of each decorative pattern to be visible through the top layer to give the laminate an appearance of depth. This document discloses also a method of making said decorative member, comprising: forming a lay-up comprising a stack of at least two resin impregnated decorative layers having a decorative pattern. Transparency and orientation of the decorative layers of the stack are such that upon consolidation with heat and pressure, at least a portion of each decorative pattern of each layer will be visible through the top decorative layer to give the laminate an appearance of depth. The method further includes lamination of the lay-up by application of heat and pressure and cure the resins and consolidate the lay-up into a decorative laminate.

### SUMMARY OF THE INVENTION

The present invention is directed to a decorative material having geometric patterns on a surface thereof wherein the geometric patterns are formed from at least two contrasting thermoset compositions:
(a) wherein the geometric patterns are three dimensional and extend inwardly from a surface of the material, and
(b) wherein the visual appearance of the geometric patterns vary due to different cross sections of a geometric shape being exposed on the surface of the material.

Furthermore, the present invention is directed to a method of forming the decorative material comprising the steps of
(i) preparing at least two flowable contrasting thermosettable molding compositions,
(ii) combining the thermosettable molding compositions in a controlled fashion such that the individual molding compositions are discernable and create a three dimensional geometric shape,
(iii) dividing the combined molding compositions into individual discrete portions in a manner that reveals cross sections of the geometric shape,
(iv) combining the individual discrete portions containing cross sections of the geometric shape, and
(v) fusing adjacent surfaces of individual discrete portions to form the decorative material having geometric patterns.

### DETAILED DESCRIPTION OF THE INVENTION

Thermosettable materials useful in the present invention are not specifically limited as long as they can be formed into discrete portions, are flowable under molding conditions and can be formed into a solid surface material. Useful thermosettable materials include acrylic, polyester, epoxy, urethane, acrylo-urethane, melamine and combinations thereof.

A preferred thermosettable material is acrylic and includes various kinds of conventional acrylic group monomers, acrylic group partial polymers, vinyl monomer for copolymerization other than acrylic group monomers, or oligomer. As the acrylic group monomer, (meth)acrylic ester is preferable. Also, in this specification, "(meth)acrylic" means "acrylic and/or methacrylic". A particularly good and especially preferred monomer is methyl methacrylate (MMA) while a particularly good and especially preferred polymer is poly(methyl methacrylate) PMMA.

Other monomers useful as polymerizable constituents are alkyl acrylates and methacrylates in which the alkyl groups can be from 1-18 carbon atoms, but preferably 1-4 carbon atoms. Suitable acrylic monomers are methyl acrylate; ethyl acrylate and methacrylate; n-propyl and i-propyl acrylates and methacrylates; n-butyl, 2-butyl, i-butyl and t-butyl acrylates and methacrylates; 2-ethylhexyl acrylate and methacrylate; cyclohexyl acrylate and methacrylate; omega-hydroxyalkyl acrylates and methacrylates; N,N-dialkylaminoalkyl acrylates and methacrylates; N-[t-butyl]aminoethyl acrylate and methacrylate.

Other unsaturated monomers include such compounds as styrene; bis-[beta-chloroethyl] vinylphosphonate; vinyl acetate; α-methylenebutyrolactone (MBL); acrylonitrile; methacrylonitrile; acrylic and methacrylic acids; 2-vinyl- and 4-vinyl pyridines; maleic acid, maleic anhydride and esters of maleic acid; acryl amide and methacrylamide; itaconic acid, itaconic anhydride and esters of itaconic acid and multifunctional monomers for cross-linking purposes such as unsaturated polyesters: alkylene diacrylates and dimethacrylates; allyl acrylate and methacrylate; N-hydroxymethylacrylamide and N-hydroxymethylmethacryl-amide; N,N'-methylene diacrylamide and dimethacrylamide; glycidyl acrylate and methacrylate; diallyl phthalate; divinylbenzene; divinyltoluene; trimethylol-propane, triacrylate and trimethacrylate; pentaerythritol tetraacrylate and tetramethacrylate; triallyl citrate and triallyl cyanurate.

Materials which differ in opacity, density, and reflectivity such as mica, alumina, silica, glasses, ceramics, metals, polymers or other natural or synthetic substrates coated with various materials (minerals, dyes, etc.) may be included in the molding composition for reflectivity, interference patterns or selective color absorption. Fibers, which may be polymeric, natural (wood, cotton, etc), ceramic, glass, or metal also present a different appearance depending on the angle of observation.

The molding compositions may include particulate or fibrous fillers. In general, fillers increase the hardness, stiffness or strength of the final article relative to the pure polymer or combination of pure polymers. It will be understood, that in addition, the filler can provide other attributes to the final article. For example, it can provide other functional properties, such as flame retardation, or it may serve a decorative purpose and modify the aesthetic. Some representative fillers include alumina, alumina trihydrate (ATH), alumina monohydrate, aluminum hydroxide, aluminum oxide, aluminum sulfate, aluminum phosphate, aluminum silicate, Bayer hydrate, borosilicate, calcium sulfate, calcium silicate, calcium phosphate, calcium carbonate, calcium hydroxide, calcium oxide, apatite, glass bubbles, glass microspheres, glass fiber, glass bead, glass flake, glass powder, glass spheres, barium carbonate, barium hydroxide, barium oxide, barium sulfate, barium phosphate, barium silicate, magnesium sulfate, magnesium silicate, magnesium phosphate, magnesium hydroxide, magnesium oxide, kaolin, montmorillonite, bentonite, pyrophyllite, mica, gypsum, silica (including sand), ceramic microspheres, ceramic particles, ceramic whisker, powder talc, titanium dioxide, diatomaceous earth, wood flour, borax, or combinations thereof.

Furthermore, the fillers can be optionally coated with sizing agents, for example, silane (meth)acrylate which is commercially available from OSI Specialties (Friendly, VN) as Silane 8 Methacrylate A-174. The filler is present in the form of small particles, with an average particle size in the range of from about 5-500 µm (microns), and can be present in amounts of up to 65% by weight of the molding compositions.

The nature of the filler particles, in particular, the refractive index, has a pronounced effect on the aesthetics of the final article. When the refractive index of the filler is closely matched to that of the polymer component, the resulting final article has a translucent appearance. As the refractive index deviates from that of the polymer component, the resulting appearance is more opaque. Because the index of refraction of ATH is close to that of PMMA, ATH is often preferred filler for PMMA systems. Of particular interest are fillers with particle size between 10 microns and 100 µm (microns). Alumina (Al₂O₃) improves resistance to marring. Fibers (e.g., glass, nylon, aramid and carbon fibers) improve mechanical properties. Examples of some functional fillers are antioxidants (such as ternary or aromatic amines, Irganox^{®} (Octadecyl 3,5-Di-(tert)-butyl-4-hydroxyhydrocinnamate) supplied by Ciba Specialty Chemicals Corp., and sodium hypophosphite, flame retardant (such as halogenated hydrocarbon, mineral carbonate, hydrated mineral, and antimony oxide), UV stabilizers (such as Tinuvin^{®} supplied by Ciba Geigy), stain-resistant agents such as poly(tetrafluoroethylene) (e.g., Teflon^{®} from DuPont), stearic acid, and zinc stearate, or combinations thereof.

The composition can optionally include decorative fillers. Such decorative fillers, although they may have a minor effect on physical properties, are present primarily for aesthetic reasons. Examples of suitable decorative fillers include pigment and other water-insoluble colorant, reflective flake, metal particle, rock, colored glass, colored sand of various sizes, wood products, such as fiber, pellets and powders, and others. The particle size will vary with the nature of the decorative filler and can be as small as sub-micron or as large as several centimeters.

In carrying out the process of this invention, solids such as filler, colorant, and decorative filler may be premixed prior to adding thermosettable ingredients. Mixing is terminated when the resulting mixture thickens and illutratively becomes doughlike forming a thermosettable molding composition that is flowable under the selected molding conditions. As an example, starting materials for the process of this invention may be multiple embodiments of the molding compositions made by the procedure described in Weberg, et al., US Patent 6,203,911, B1.

The multiple molding compositions are combined in a manner that they are incompletely mixed and the individual compositions form a geometric shape. It is understood that "geometric" is employed in its normal meaning and is directed to rectilinear or simple curvilinear motifs or outlines in design. However in the present invention the geometric shape is three-dimensional. Examples of surface appearances resulting from a geometric shape are in the form of stripes and swirls due to the visually contrasting molding compositions. Some examples of methods for combining compositions into geometric shapes include: lamination of extruded or calendered ribbons of various compositions and various methods of blending.

It is within the scope of the present invention that simple linear extrusion of at least two molding compositions is employed. In such instance the final decorative material will have an appearance of stripes. However, since the geometic shape is three dimensional, different orientations of the stripes will be present on a surface of the final decorative material.

Additionally it is within the scope of the present invention, that the geometric shape does not have a surface appearance of a stripe. Thus, a surface appearance of the geometric shape may be in the form of a swirl or related curvilinear motif with the geometric shape determined by the process of combining individual themosettable molding compositions.

For purposes of illustration, the individual thermosettable molding compositions may be extruded in non-linear fashion to form a curvilinear, three-dimensional design. Alternatively, the individual thermosettable molding composition may be combined by incomplete mixing. It is understood that the combining step may be undertaken wherein a portion of a combined molding composition forms a geometric shape while a portion does not.

Thereafter, the combined molding compositions containing a geometric shape are divided into individual discrete portions which results in cross sections of the geometric shape having varying surface appearnces. It is understood that the term "cross section" includes a partial cross section. The manner of dividing the combined molding compositions may be undertaken in random fashion (such as by grinding) or in a uniform manner (such as by cutting). A random dividing may result in some of the individual discrete portions retaining at least part of the geometric shape appearance while other portions do not. However in the final decorative material, geometric patterns be present which result from the cross sections of the geometric shape. Therefore preferably the division of the combined molding compositions results in a substantial portion of the individual portions having a geometric appearance.

The step of dividing may be undertaken in a number of ways such as cutting, chopping, tearing, extruding or grinding. Depending on the method of dividing, different surface appearances can be obtained. Also, the sizes of the individual discrete portions can vary. For purposes of illustration, the largest dimension of the individual discrete portion can range from 2 mm to 100 cm.

After formation of individual discrete portions which retain at least some of the geometric design, these individual discrete portions are combined prior to a step of fusing. Illustratively the fusion of these previously discrete portions is under pressure and elevated temperate, such as in a mold, wherein the thermosettable composition becomes thermoset. In the fusion step, adjacent surfaces contact one another and allow cross sections of the geometric shape to be retained. Also, the individual discrete portions typically are combined in a random fashion and upon fusion provide varying surface appearances due to the three-dimensional nature of these portions.

The conditions of the fusing step are dependent on the employed thermosettable compositions and can vary over a wide range; e.g., in conjunction with elevated temperature and pressure. Generally, the fusing step will also convert the thermosettable to a final decorative thermoset material.

As previously discussed, the surface of the final decorative material will have repeating geometric surface patterns. Since this decorative material is formed from cross sections of a geometric shape which is three-dimensional, the surface patterns will differ in appearance due to different cross sections. Typically the geometric patterns extend throughout or substantially throughout the decorative material including interior portions..

Also, it is within the scope of the present invention that not only the size and shape of the geometric patterns can differ, but also their concentration. In the step of combining individual discrete portions of the thermosettable compositions, additional non-geometric (or other geometric) fusable portions may be added. Furthermore, if the added portions are sufficiently small, these added portions need not be fusable. Also it is within the scope of the present invention that more than one geometric shape is employed which results in different geometric patterns in the final article. Also color is an important feature in allowing different surface appearanes.

The invention can be more fully understood by reference to the following examples in which parts and percentages are by weight and temperature in Centigrade unless otherwise indicated.

### EXAMPLES

### Example 1

A method for creating a layered blend of two or more colors. The interface between the colors is very sharp due to lack of blending. Weigh the following ingredients for 1^{st} color (black-gold).
1120 grams ATH (Alcan)
401 grams Paraloid^{®} Latex K120ND [poly(methyl methacrylate/ethyl acrylate)] polymer particle setting agent (Rohm & Haas Company)
6 grams Zinc Stearate
40 grams Afflair^{®} 305 Solar Gold Mica
362 grams Methyl methacrylate (MMA)
58 grams Ethylene glycol dimethacrylate (EGDMA)
6.94 grams Luperox^{®} 575 (t-amyl peroxy-2-ethyl hexanoate) thermal initiator from Atofina
1.14 grams Vazo^{®} 67 [2-2'-azobis(methyl butyronitrile) thermal initiator ] from DuPont
1.68 grams Zelec^{®} MO
2.86 grams Carbon Black pigment dispersion

Add the MMA, EGDMA, and Zelec^{®} MO to a small vessel. Mix with an impeller driven by an air motor for 2 minutes to mix evenly. Add the Luperox 575, then add the Vazo^{®} 67. Mix for 10 minutes to mix fully and ensure the Vazo^{®} 67 is fully dissolved. Dry Blend the first three ingredients (ATH, Paraloid^{®}, and Zinc Stearate) to the mixer (Ross Double Planetary Mixer (DPM) LDM-2 equipped with high viscosity mixing blades) Blend for 5 minutes to mix the dry ingredients. Add the mica to the dry ingredients. Add the Carbon Black pigment dispersion to the dry ingredients in the DPM. Add the liquid ingredients from the premix step. Blend for six minutes beyond the point where the ingredients coalesce into a cohesive compound. Remove from mixer and seal in a container impervious to MMA. Second Composition

Repeat the above with the following levels of the ingredients for 2nd color (gold). In this case no pigment dispersion is added.
1120 grams ATH (Alcan)
401 grams Paraloid^{®} Latex K120ND (Rohm & Haas Company)
6 grams Zinc Stearate
40 grams Afflair^{®} 305 Solar Gold Mica
365 grams Methyl methacrylate (MMA)
58.4 grams Ethylene glycol dimethacrylate (EGDMA)
6.98 grams Luperox^{®} 575
1.14 grams Vazo^{®} 67
1.68 grams Zelec^{®} MO

To prepare the mold charge, let the molding compound from the previous step rest for a minimum of one hour to allow additional absorption of the MMA into the latex particles. Weigh out desired ratio of each color. In this case 1:1, so 2000 grams of each color. Use a calendaring roll to create a flattened disk or ribbon of each color. Layer the two colors. Run through calendaring roll to reduce thickness. Fold the material to double thickness and create more layers. Repeat rolling and folding steps to create the desired number of layers. In these samples the number of layers was 8 and 16. The material can now be cut into charge fragments (cubes roughly two centimeters in dimension) for molding. Seal fragments in a container impervious to MMA until ready for molding

Alternatively, the compound may be placed into the DPM. Mix at mixer speed of 2. The blades will begin to fragment the molding compound. For this example, continue mixing until the fragments are all 1.5 cm or less in diameter. Seal fragments in a container impervious to MMA until ready for molding.

Weigh 900 grams of the fragments from the previous step. Preheat an 8"x8" (20.32x20.32 cm) plaque mold to 122 C. Pour the pre-weighed material into the hot mold, spreading so the charge is evenly distributed. Close the mold and apply 1480 psig (102 bar) for 8 minutes to cure the part. Remove from the mold. The part as molded has a very thin surface layer in which the mica is highly oriented parallel to the surface of the part. The individual compositions are present in a discernable geometric pattern. This is attractive and could be used as such, but would not be repairable with techniques common in the solid surface industry. To reveal a surface, which is representative of the bulk of the material, a light sanding is required.

### Example 2

A method for creating a patterned blend of two or more colors using a ram extruder. Two molding compositions, similar to that of Example 1 were prepared; one black and one white. These compositions were introduced into the feed throat of a ram extruder fitted with a circular die. In a first trial, profiles were generated by feeding the ram with approximately 1-inch (2.54 cm) length, 1.5-inch (3.81 cm) diameter disks of alternating black and white composition. The extrudate cross-sections show a highly elongated parabolic velocity profile.

In a second trial, the ram extruder was fed with a mixture of extruded noodles, approximately 0.13" (0.33 cm) in diameter, of the black and white compositions. The extrudate exhibited a parabolic distortion of the random mixed pattern. The profiled materials described above were chopped into charge fragments of different sizes and reserved for molding.

The charge fragments were molded in an 8"x8"(20.32x20.32 cm) heated steel mold at 120 C at a pressure of 900 psig (62.05 bar) for 6 minutes. The resulting molded plaques from the first trial showed dominant domains of the two colored compositions. Molded plaques from the second trial showed a distinct dot and line pattern.

### Example 3

A method for creating a patterned blend of two or more colors using a twin screw extruder Two molding compositions, similar to that of example 1, were prepared; one black and one white. These compositions were processed as outlined below and introduced into the feed of a single screw extruder fitted with a circular die.

They were first extruded into 1.5" diameter by 3"(3.81x7.62 cm) long pieces. These pieces were feedstock for subsequent blending experimentation. The pieces were tumble-blended at a 1:1 ratio and charged into a single screw extruder fitted with a 1.5"(3.81 cm) diameter circular die. The resulting extruded profile material had a regular, swirled cinnamon roll pattern in the longitudinal direction. The extrudate was cut longitudinally and molded as in Example 2 to give a pattern resembling wood grain in the final molded plaque.

The extrudate was also cut crosswise into small disks, manually arranged in the mold cavity and molded as in Example 2 to result in a pattern having regular swirled domains in the final molded plaque.

A mixture of chopped extrudate was introduced randomly into the mold and molded as in Example 2. The resulting molded plaque exhibited a knotty woodgrain appearance in the final molded plaque.

## Claims

1. A decorative material having geometric patterns on a surface thereof wherein the geometric patterns are formed from at least two contrasting thermoset compositions:
(a) wherein the geometric patterns are three dimensional and extend inwardly from a surface of the material, and
(b) wherein the visual appearance of the geometric patterns vary due to different cross sections of a geometric shape being exposed on the surface of the material.

2. The decorative material of claim 1 wherein the geometric patterns extend throughout interior portions of the decorative material.

3. The decorative material of claim 1 wherein the geometric patterns comprise stripes.

4. The decorative material of claim 1 wherein the geometric patterns are other than in the form of stripes .

5. The decorative material of claim 4 wherein the geometric patterns comprise swirls.

6. The decorative material of claim 1 which contains additional thermoset composition which is not present in the geometric patterns.

7. The decorative material of claim 1 wherein at least one of the molding compositions comprises an acrylic.

8. The decorative material of claim 1 which contains a filler which imparts flame retardation.

9. The decorative material of claim 8 wherein the filler comprises alumina trihydrate.

10. A method of forming a decorative material having geometric patterns on a surface thereof wherein the geometric patterns are formed from at least two contrasting thermoset compositions:
(a) wherein the geometric patterns are three dimensional and extend inwardly from a surface of the material, and
(b) wherein the visual appearance of the geometric patterns vary due to different cross sections of a geometric shape being exposed on the surface of the material
comprising the steps of
(i) preparing at least two flowable contrasting thermosettable molding compositions,
(ii) combining the thermosettable molding compositions in a controlled fashion such that the individual molding compositions are discernable and create a three dimensional geometric shape,
(iii) dividing the combined molding compositions into individual discrete portions in a manner that reveals cross sections of the geometric shape,
(iv) combining the individual discrete portions containing cross sections of the geometric shape, and
(v) fusing adjacent surfaces of individual discrete portions to form the decorative material having geometric patterns.

11. The method of claim 10 wherein step (v) of fusing adjacent surfaces includes heat and pressure to provide a shaped decorative material.

## Patentansprüche

1. Dekoratives Material mit geometrischen Mustern auf einer Oberfläche des Materials, wobei die geometrischen Muster aus mindestens zwei kontrastierenden hitzehärtbaren Zusammensetzungen gebildet werden:
(a) wobei die geometrischen Muster dreidimensional sind und sich von einer Oberfläche des Materials nach innen erstrecken, und
(b) wobei das Aussehen der geometrischen Muster aufgrund unterschiedlicher Querschnitte einer an der Oberfläche des Materials freigelegten geometrischen Form variiert.

2. Dekoratives Material nach Anspruch 1, wobei sich die geometrischen Muster durch innere Abschnitte des dekorativen Materials erstrecken.

3. Dekoratives Material nach Anspruch 1, wobei die geometrischen Muster Streifen aufweisen.

4. Dekoratives Material nach Anspruch 1, wobei die geometrischen Muster eine andere als die Streifenform aufweisen.

5. Dekoratives Material nach Anspruch 4, wobei die geometrischen Muster Wirbel aufweisen.

6. Dekoratives Material nach Anspruch 1, das eine zusätzliche hitzehärtbare Zusammensetzung enthält, die nicht in den geometrischen Mustern vorhanden ist.

7. Dekoratives Material nach Anspruch 1, wobei mindestens eine der Formmassezusammensetzungen ein Acrylharz aufweist.

8. Dekoratives Material nach Anspruch 1, das einen Füllstoff enthält, der Flammwidrigkeit verleiht.

9. Dekoratives Material nach Anspruch 8, wobei der Füllstoff Aluminiumoxidtrihydrat aufweist.

10. Verfahren zum Formen eines dekorativen Materials mit geometrischen Mustern auf einer Oberfläche des Materials, wobei die geometrischen Muster aus mindestens zwei kontrastierenden hitzehärtbaren Zusammensetzungen gebildet werden:
(a) wobei die geometrischen Muster dreidimensional sind und sich von einer Oberfläche des Materials nach innen erstrecken, und
(b) wobei das Aussehen der geometrischen Muster aufgrund unterschiedlicher Querschnitte einer an der Oberfläche des Materials freigelegten geometrischen Form variiert,
wobei das Verfahren die folgenden Schritte aufweist:
(i) Herstellen von mindestens zwei fließfähigen kontrastierenden hitzehärtbaren Formmassezusammensetzungen,
(ii) Vereinigen der hitzehärtbaren Formmassezusammensetzungen auf kontrollierbare Weise, so daß die einzelnen Zusammensetzungen unterscheidbar sind und eine dreidimensionale geometrische Form erzeugen,
(iii) Teilen der vereinigten Formmassezusammensetzungen in einzelne diskrete Abschnitte auf eine Weise, die Querschnitte der geometrischen Form freilegt,
(iv) Vereinigen der einzelnen diskreten Abschnitte, die Querschnitte der geometrischen Form enthalten, und
(v) Verschmelzen benachbarter Oberflächen einzelner diskreter Abschnitte, um dekoratives Material mit geometrischen Mustern zu formen.

11. Verfahren nach Anspruch 10, wobei der Schritt (v) zum Verschmelzen benachbarter Oberflächen Wärme und Druck einschließt, um ein geformtes dekoratives Material bereitzustellen.

## Revendications

1. Matériau décoratif ayant des motifs géométriques sur une surface de celui-ci, dans lequel les motifs géométriques sont formés à partir d'au moins deux compositions thermodurcissables de contraste:
(a) dans lequel les motifs géométriques sont à trois dimensions et s'étendent vers l'intérieur à partir d'une surface du matériau; et
(b) dans lequel l'apparence visuelle des motifs géométriques varie dû aux différentes sections transversales d'une forme géométrique exposée à la surface du matériau.

2. Matériau décoratif selon la revendication 1, dans lequel les motifs géométriques s'étendent à travers les portions internes du matériau décoratif.

3. Matériau décoratif selon la revendication 1, dans lequel les motifs géométriques comprennent des rayures.

4. Matériau décoratif selon la revendication 1, dans lequel les motifs géométriques sont autres qu'en forme de rayures.

5. Matériau décoratif selon la revendication 4, dans lequel les motifs géométriques comprennent des volutes.

6. Matériau décoratif selon la revendication 1, qui contient une composition supplémentaire thermodurcissable qui n'est pas présente dans les motifs géométriques.

7. Matériau décoratif selon la revendication 1, dans lequel au moins l'une des compositions de moulage comprend un acrylique.

8. Matériau décoratif selon la revendication 1, qui contient une charge qui confère une propriété d'ignifugation.

9. Matériau décoratif selon la revendication 8, dans lequel la charge comprend de l'alumine trihydratée.

10. Procédé de formation d'un matériau décoratif ayant des motifs géométriques sur une surface de celui-ci, dans lequel les motifs géométriques sont formés à partir d'au moins deux compositions thermodurcissables de contraste:
(a) dans lequel les motifs géométriques sont à trois dimensions et s'étendent vers l'intérieur à partir d'une surface du matériau, et
(b) dans lequel l'apparence visuelle des motifs géométriques varie dû aux différentes sections transversales d'une forme géométrique exposée à la surface du matériau
comprenant les étapes de
(i) préparation d'au moins deux compositions de moulage thermodurcissables fluides de contraste,
(ii) combinaison des compositions de moulage thermodurcissables d'une manière contrôlée de sorte que les compositions individuelles de moulage puissent être discernées et créent une forme géométrique à trois dimensions,
(iii) division des compositions de moulage combinées en portions individuelles discrètes d'une manière qui révèle les sections transversales du motif géométrique,
(iv) combinaison des portions individuelles discrètes contenant les sections transversales de la forme géométrique, et
(v) fusion des surfaces adjacentes des portions individuelles discrètes pour former le matériau décoratif ayant des motifs géométriques.

11. Procédé selon la revendication 10, dans lequel l'étape (v) de fusion des surfaces adjacentes inclut de la chaleur et de la pression pour fournir un matériau décoratif mis en forme.
